# EUROPEAN PATENT SPECIFICATION

(11) **EP 4 215 738 B1**
(45) Date of publication and mention of the grant of the patent: **11.09.2024**
(21) Application number: 23150231.1
(22) Date of filing: 04.01.2023
(51) Int. Cl.: F02C 9/00, B64C 11/44, B64D 27/24, F02K 5/00

(54) **HYBRID POWER SYSTEM**
HYBRIDANTRIEBSSYSTEM
SYSTÈME D'ALIMENTATION HYBRIDE

(30) Priority: 25.01.2022 GB 202200896
(43) Date of publication of application: 26.07.2023
(73) Proprietor: Rolls-Royce plc, London N1 9FX (GB)
(72) Inventor: Hickey, Conor, Derby, DE24 8BJ (GB); MacKay, Andrew, Derby, DE24 8BJ (GB)
(74) Representative: Rolls-Royce plc

(56) References cited:
- US-A1- 2018 370 646
- US-A1- 2020 153 252
- US-A1- 2021 017 914
- US-A1- 2021 246 837
- US-B2- 10 435 165
- US-B2- 11 053 013

## Description

### Field of the Invention

The present invention relates to a hybrid power system for an aircraft comprising a gas turbine and an electrical storage device.

### Background

The conventional propulsion system of a large modern aircraft typically comprises one or more gas turbines as a primary source of propulsive power.

United States Patent Application US 2021246837 discloses a surge control system which includes a rotor system with at least one compressor section and at least one turbine section operably coupled to a shaft. The surge control system also includes sensors configured to collect sensor data from the rotor system, an electric motor operably coupled to the rotor system, and a controller. The controller is operable to detect surge event from the sensor data, determine an amount of power to apply to the rotor system, and increase the amount of power provided to the rotor system to recover from the surge event.

United States Patent Application US 10435165 discloses an aircraft propulsion system in which an engine has an engine core comprising a compressor, a combustor and a turbine driven by a flow of combustion products of the combustor. At least one propulsive fan generates a mass flow of air to propel the aircraft. An electrical energy store is provided on board the aircraft. At least one electric motor is arranged to drive the propulsive fan and the engine core compressor. A controller controls the at least one electric motor to mitigate the creation of a contrail caused by the engine combustion products by altering the ratio of the mass flow of air by the propulsive fan to the flow of combustion products of the combustor. The at least one electric motor is controlled so as to selectively drive both the propulsive fan and engine core compressor.

United States Patent application US 2021017914 discloses a gas turbine engine for an aircraft comprising a high-pressure (HP) spool comprising an HP compressor and a first electric machine driven by an HP turbine; a low-pressure (LP) spool comprising an LP compressor and a second electric machine driven by an LP turbine; and an engine controller configured to identify a condition to the effect that the engine is in an approach idle condition, and operate the first electric machine in a motor mode and operate the second electric machine in a generator mode to transfer power electrically from the LP spool to the HP spool to thereby reduce the LP spool rotational speed and increase the HP spool rotational speed.

United States patent application US 2020153252 discloses a hybrid aircraft propulsion system which includes a plurality of electrical busses comprising a propulsion bus, a critical bus, and a non-critical bus; an electrical energy storage system coupled to each of the plurality of electrical busses; one or more power units configured to generate and output electrical energy via the propulsion bus; one or more electrical machines configured to drive respective propulsors using electrical energy received via the propulsion bus; one or more hotel loads configured to receive energy via the non-critical bus; and one or more critical loads configured to receive energy via the critical bus.

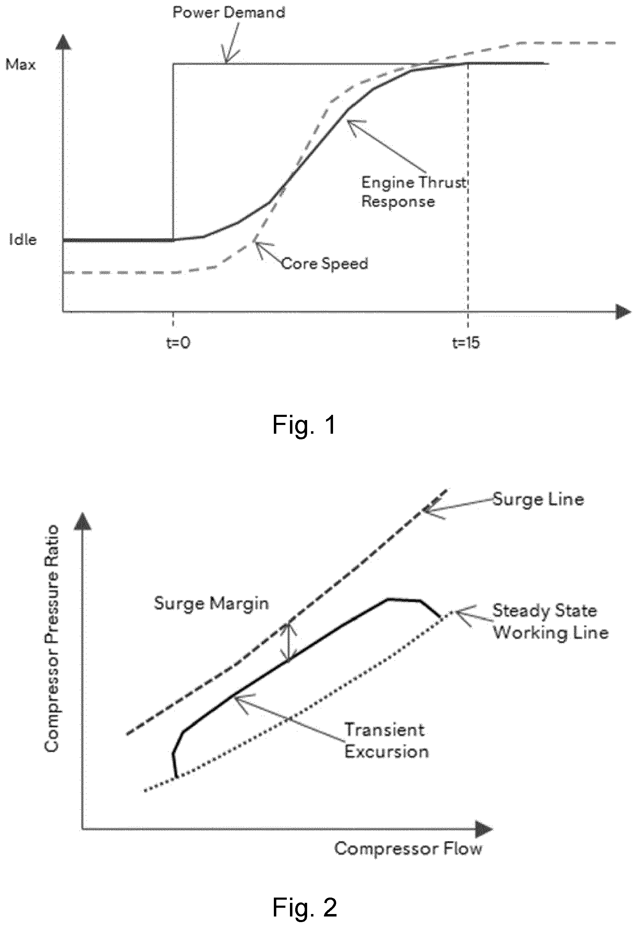

United States patent application US 11053013 discloses a unit for generating non-propulsive electrical power for use on board an aircraft, the unit comprising an electricity production device comprising a gas turbine and an electricity generator mechanically connected to an outlet shaft of the gas turbine, said electricity generator including output electrical connections for being electrically connected to an electrical power supply network on board an aircraft. The unit includes energy storage means and regulator means configured to control the speed of rotation of the gas turbine as a function of the electrical power required by the on-board electrical power supply network.Figure 1 shows a response of a conventional aircraft propulsion system comprising a gas turbine during a slam acceleration, where full thrust or shaft power is suddenly demanded from the propulsion system. A controller limits the acceleration of an HP (high-pressure) shaft of the gas turbine such that it takes the HP shaft several seconds to speed-up. This is necessary to prevent the core HP compressor of the gas turbine from becoming unstable. As a result, there is a delay in requesting full thrust and the propulsion system reaching full power output.

Figure 2 shows an illustration of compressor map for a HP compressor of a gas turbine for a conventional aircraft propulsion system during a slam acceleration. In normal, steady state conditions the compressor operates on the steady state working line. During a slam acceleration, the compressor operating point moves off the steady state working line towards the surge line. If the compressor operating point reaches the surge line the compressor will surge. This is an unwanted critical event characterised by violent air flow oscillating in the axial direction of the compressor. Therefore, the controller must ensure that the compressor does not surge by restricting the amount of fuel fed into the gas turbine, and thereby limiting the acceleration of gas turbine.

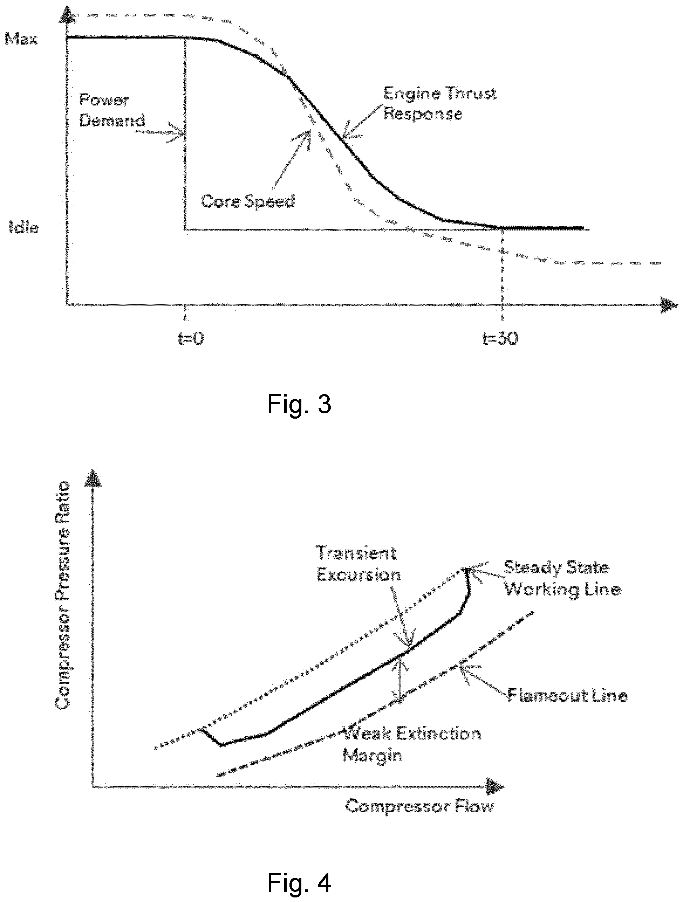

Figure 3 shows the response of a conventional aircraft power system during a slam deceleration, where a sudden decrease in thrust or shaft power is requested. Similarly to slam acceleration, the deceleration of the HP shaft is limited to ensure stability of the gas turbine. Therefore, although there is a step-change in power demand, a delay is deliberately introduced between that demand and the final realisation of propulsion system response Figure 4 shows a compressor map for a HP compressor of a gas turbine for a conventional aircraft propulsion system during a slam deceleration. The controller must ensure that the compressor does not fall below the flameout line and maintain a large enough weak extinction margin. This is achieved by limiting the rate of deceleration of the HP shaft, thereby limiting the response time of the propulsion system to the deceleration request.

As a result of these limits, there can be a significant delay between a request for a sudden change in thrust and the propulsion system responding, reducing the manoeuvrability and responsiveness of the aircraft.

Accordingly, a power system is desired for an aircraft which can more quickly and safely vary its power output without risking surge events or other instabilities.

The present invention has been devised in light of the above considerations.

### Summary of the Invention

In a first aspect, the present disclosure provides hybrid power system for an aircraft comprising:
a gas turbine connected to a generator for generating electrical power;
an electrical storage device configured to output electrical power;
a propulsor;
a motor operable to drive the propulsor using electrical power from either or both of the generator and the electrical storage device; and
a controller which, to meet a propulsor power demand, is configured to control (i) an amount of electrical power generated by the generator, and (ii) an amount of electrical power outputted by the electrical storage device;
wherein, in a first control mode coinciding with an increase in the propulsor power demand sufficient to cause a transient excursion of the operating point of a compressor of the gas turbine from a steady state working line, the controller is further configured to temporarily increase the amount of electrical power outputted by the electrical storage device such that the transient excursion is reduced; characterised in that: the generator is configured to provide electrical power to the motor at a first DC voltage and first DC current,
the electrical storage device is configured to provide electrical power to the motor at a second DC voltage and a second DC current, and
the controller is configured to control the first and second DC voltages using DC voltage droop control by setting a droop percentage or droop virtual resistance and setting a transient response of the controller such that the second DC current increases at a rate faster than the first DC current.

In this way, when there is a sudden increase in the propulsor power demand of a serial hybrid power system, for instance during slam accelerations of the aircraft in which power demand changes suddenly from idle to full power, the initial deficit in power demand can be compensated for by using electrical power from the electrical storage device. The electrical storage can provide power at a faster rate than the gas turbine. This allows the gas turbine to increase its power output at a slower rate than the propulsor power demand, while the propulsor power demand is still met. Therefore, a high-pressure shaft of the gas turbine is able to accelerate at a rate which ensures stability of the gas turbine. Moreover, the slower rate of power increase reduces the excursion of the operating point of the compressor from its steady state working line. Thus, the power provided to the propulsor may be increased more quickly and without exceeding the gas turbine's surge margin.

The electrical storage device of the first aspect may be further configured to receive electrical power from the generator; and the controller, to meet a propulsor power demand, may be further configured to control (i) the amount of electrical power generated by the generator, and (ii) an amount of electrical power received by the electrical storage device from the generator. In a second control mode coinciding with a decrease in the propulsor power demand sufficient to cause a transient excursion of the operating point of the compressor of the gas turbine from a steady state working line, the controller may be further configured to temporarily increase the amount of electrical power received by the electrical storage device such that the transient excursion is reduced. In this way, when there is a sudden decrease in the propulsor power demand, for instance during slam decelerations of the aircraft in which power demand changes suddenly from a high power to idle, the initial excess in power provided to the propulsor from the gas turbine can be used, instead, to charge the electrical storage system. Thus, the power provided to the propulsor may be decreased more quickly while maintaining an adequate weak extinction margin so that flameout is avoided. In particular, excess power from the gas turbine may be diverted into the electrical storage device so that the portion of the power going to the propulsor decreases as required, but the reduction in gas turbine power output can be slowed down.

The controller of the first aspect may be configured to: monitor a state of charge of the electrical storage system; and when the state of charge is lower than a target state of charge, increase the state of charge by increasing the power output of the gas turbine in excess of that required by the propulsor power demand such that the electrical storage system receives electrical power from the generator, and when the state of charge is higher than the target state of charge, decrease the state of charge by decreasing the power output of the generator to be less than that required by the propulsor power demand such that the electrical storage system outputs electrical power to the motor. Advantageously, this arrangement allows the electrical storage system to be re-charged when the propulsor power demand is less than that which the gas turbine is capable of providing alone. Therefore, the electrical storage device can be provided in advance with a store of electrical power ready to output to the propulsor when the propulsor power demand increases at a rate faster than the gas turbine can support. Similarly, the arrangement can ensure that the electrical storage device has sufficient capacity to receive excess power when the propulsor power demand decreases at a rate faster than the gas turbine can support. The target state of charge may be about 70% of the full capacity of the electrical storage device.

The generator of the first aspect may be configured to generate power at a constant DC voltage such that the current generated by the generator varies when the propulsor power demand varies. The controller may then be configured in the first control mode to detect an increase in the rate of increase of the current generated by the generator caused by an increase in the propulsor power demand, and in response increase the amount of current output by the electrical storage device to constrain the rate of increase in the current generated by the generator to within a predetermined limit. Advantageously, this arrangement enables the electrical power provided by the electrical storage system to be quickly and efficiently increased in response to changes in the propulsor power demand, thus limiting sudden power demand increases being imposed on the generator and the gas turbine which may cause compressor surge or other instability. Similarly, the controller may be configured in the second control mode to detect an increase in the rate of decrease of the current generated by the generator caused by a decrease in the propulsor power demand and, in response increase the amount of electrical power received by the electrical storage device to constrain the rate of decrease in the current generated by the generator to within a predetermined limit.

The generator of the first aspect is configured to provide electrical power to the motor at a first DC voltage and first DC current, the electrical storage device may be configured to provide electrical power to the motor at a second DC voltage and a second DC current. The controller may then be configured to control the first and second DC voltages using DC voltage droop control by setting a droop percentage or droop virtual resistance and setting a transient response of the controller such that the second DC current increases at a rate faster than the first DC current. In this way, a stable current sharing arrangement between the generator and the electrical storage device can be achieved which allows the response of the two sources to conditions of steady state propulsor power demand and to transients in the propulsor power demand to be tuned. For example, in the first control mode, providing different droop characteristics to the generator and to the electrical storage device allows control of the split between power from the generator and electrical storage device, while tuning of the transient characteristics of the controller in respect of the generator and the energy storage device allows the current provided by the generator to increase more slowly than the current outputted by electrical storage device when the propulsor power demand increases. Thus this arrangement provides efficient means to tune the responses of the two sources enabling the increased power demand to be achieved quickly while also enabling the gas-turbine to accelerate at rate which is stable and avoids compressor surge.

The generator and the electrical storage device of the first aspect may be configured to generate electrical power at a constant DC voltage. The controller may then include a model of desired propulsor responses, and may be configured to monitor the power consumption of the motor, and in the first control mode to use the model to calculate a target current to be output by the electrical storage device in response to an increase in the power consumption of the motor. This arrangement also enables the electrical power received by the electrical storage system to be quickly and efficiently increased in response to changes in the propulsor power demand, thus limiting sudden power demand decreases being imposed on the generator and the gas turbine which may cause compressor surge or other instability. The controller may also be configured in the second control mode to use the model to calculate a target current to be received by the electrical storage device from the generator in response to a decrease in the power consumption of the motor.

In a non-claimed aspect a hybrid power system for an aircraft is provided comprising:
a propulsor;
a gas turbine for driving the propulsor via a purely mechanical drive train that extends from the gas turbine to the propulsor;
an electrical storage device configured to output electrical power;
a motor connecting to the drive train and operable to drive the propulsor using electrical power from the electrical storage device;
a controller which, to meet a propulsor power demand, is configured to control (i) an amount of torque transmitted to the propulsor from the gas turbine, and (ii) an amount of electrical power outputted by the electrical storage device;
wherein, in a first control mode coinciding with an increase in the propulsor power demand sufficient to cause a transient excursion of the operating point of a compressor of the gas turbine from a steady state working line, the controller is further configured to temporarily increase the amount of electrical power outputted by the electrical storage device such that the transient excursion is reduced.

In this way, when there is a sudden increase in the propulsor power demand of a parallel hybrid power system, for instance during slam accelerations of the aircraft in which power demand changes suddenly from idle to full power, the initial deficit in power demand can be compensated for by using electrical power from the electrical storage device. The electrical storage can provide power at a faster rate than the gas turbine. This allows the gas turbine to increase its power output at a slower rate than the propulsor power demand, via the gearbox, while the propulsor power demand is still met. Therefore, the high-pressure shaft of the gas turbine is able to accelerate at a rate which ensures stability of the gas turbine. Moreover, the slower rate of power increase reduces the excursion of the operating point of the compressor from its steady state working line. Thus, the power provided to the propulsor from the motor may be increased more quickly and without exceeding the gas turbine's surge margin.

The electrical storage device of the second aspect may be further configured to receive electrical power; the motor may be operable as a generator to extract power from the gas turbine and provide electrical power to the electrical storage device; and the controller, to meet a propulsor power demand, may be further configured to control (i) the amount of torque transmitted to the propulsor from the gas turbine, and (ii) an amount of electrical power received by the electrical storage device from the motor operating as a generator. In a second control mode coinciding with a decrease in the propulsor power demand sufficient to cause a transient excursion of the operating point of the compressor of the gas turbine from a steady state working line, the controller may be further configured to temporarily increase the amount of electrical power received by the electrical storage device such that the transient excursion is reduced. In this way, when there is a sudden decrease in the propulsor power demand, for instance during slam decelerations of the aircraft in which power demand changes suddenly from a high power to idle, the initial excess in power provided by the gas turbine can be used, instead, to charge the electrical storage system. Thus, the power provided to the propulsor may be decreased more quickly while maintaining an adequate weak extinction margin so that flameout is avoided. In particular, excess power from the gas turbine may be diverted into the electrical storage device so that the portion of the power going to the propulsor decreases as required, but the reduction in gas turbine power output can be slowed down.

The controller of the second aspect may be configured to: monitor a state of charge of the electrical storage system; and when the state of charge is lower than a target state of charge, increase the state of charge by increasing the power output of the gas turbine in excess of that required by the propulsor power demand such that the electrical storage system receives electrical power from the motor operating as a generator, and when the state of charge is higher than the target state of charge, decrease the state of charge by decreasing the power output of the gas turbine to be less than that required by the propulsor power demand such that the electrical storage system outputs electrical power to the motor. Advantageously, this arrangement allows the electrical storage system to be re-charged when the propulsor power demand is less than that which the gas turbine is capable of providing alone. Therefore, the electrical storage device can be provided in advance with a store of electrical power ready to output to the propulsor when the propulsor power demand increases at a rate faster than the gas turbine can support. Similarly, the arrangement can ensure that the electrical storage device has sufficient capacity to receive excess power when the propulsor power demand decreases at a rate faster than the gas turbine can support. The target state of charge may be about 70% of the full capacity of the electrical storage device.

The controller of the first or second aspect may be configured to: calculate a power excess amount which is the difference between the propulsor power demand and the propulsor power achieved by operating the gas turbine operating at a predetermined operating point; and when the power excess amount is positive, increase the amount of electrical power output by the electrical storage device, and, when the power excess amount is negative, increase the amount of power received by the electrical storage device. In particular, the predetermined operating point can be a high or maximum efficiency operating point of a compressor e.g. on a steady state working line of the compressor. The electrical storage device can thus be used to keep the actual compressor operating point at or close to the high or maximum efficiency operating point.

In a third aspect, an aircraft is provided which is fitted with one or more of the hybrid power systems of the first aspect.

### Summary of the Figures

Embodiments and experiments illustrating the principles of the invention will now be discussed with reference to the accompanying figures in which:
**Figure 1** shows schematically the response of a conventional aircraft power system during a slam acceleration;
**Figure 2** shows schematically a compressor map for a HP compressor of a gas turbine of a conventional aircraft power system during a slam acceleration;
**Figure 3** shows schematically the response of a conventional aircraft power system during a slam deceleration;
**Figure 4** shows schematically a compressor map for a HP compressor of a gas turbine of a conventional aircraft power system during a slam deceleration;
**Figure 5** shows a schematic plan view of a first aircraft comprising a parallel hybrid propulsion system;
**Figure 6** shows a schematic diagram of a parallel hybrid propulsion system for the aircraft of Figure 5;
**Figure 7** shows a schematic diagram of a variant parallel hybrid propulsion system for the aircraft of Figure 5;
**Figure 8** shows a schematic diagram of a series hybrid power system;
**Figure 9** shows schematically a response of a hybrid power system according to the present invention during a slam acceleration;
**Figure 10** shows schematically a compressor map for a HP compressor of a gas turbine of a hybrid power system according to the present invention during a slam acceleration;
**Figure 11** shows schematically a compressor map for a HP compressor of a gas turbine of a hybrid power system according to the present invention during a slam deceleration.
**Figure 12** shows schematically a response of a hybrid power system according to the present invention cycling between full power and low power demands;
**Figure 13** shows schematically movement of the operating point of a compressor on a compressor map of a gas turbine engine which is not part of a hybrid system as the propulsor power demand varies; and
**Figure 14** shows schematically movement of the operating point of a compressor on a compressor map of a gas turbine which is part of a hybrid system as propulsor power demand varies.

### Detailed Description of the Invention

Aspects and embodiments of the present invention will now be discussed with reference to the accompanying figures. Further aspects and embodiments will be apparent to those skilled in the art.

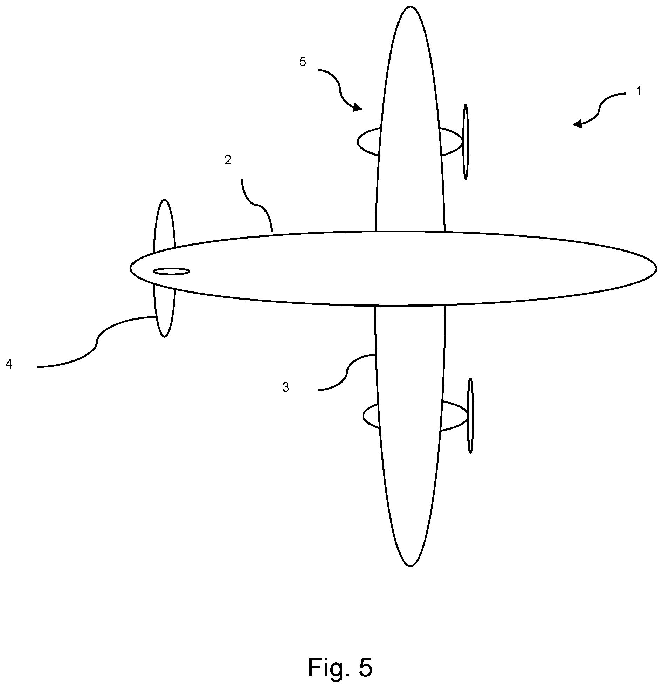

With reference to figure 5, an aircraft 1 is shown. The aircraft is of conventional configuration, having a fuselage 2, wings 3, tail 4 and a pair of propulsion systems 5.

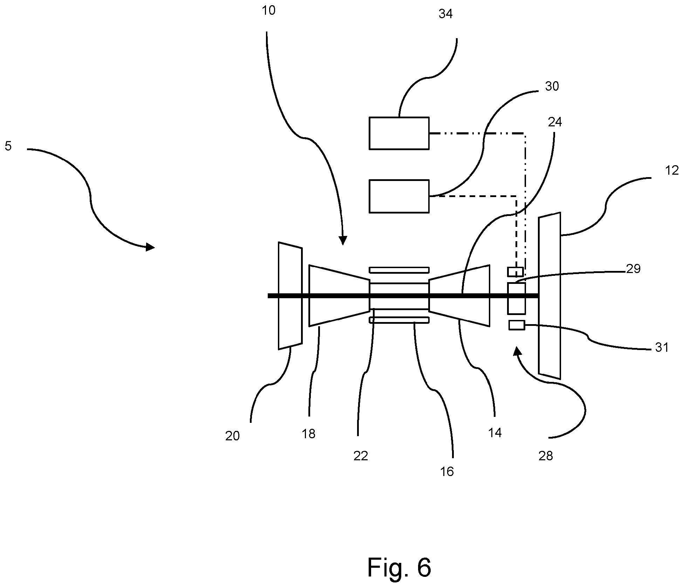

Figure 6 shows schematically one of the propulsion systems 5. It includes a gas turbine engine 10 comprising, in axial flow series, a propulsor 12 in the form of a fan or propeller, a compressor 14, combustion equipment 16 and high and low-pressure turbines 18, 20.

The gas turbine engine 10 works in a conventional manner so that air is accelerated by the fan 12 to produce two air flows: a first core air flow into the compressor 14 and a second air flow which bypasses the compressor 14 to provide propulsive thrust. The core air flows through the compressor 14 where it is compressed, before delivering that air to the combustion equipment 16, where it is mixed with fuel and the mixture combusted. The resultant hot combustion products then expand through, and thereby drive the turbines 18, 20 before being exhausted through a nozzle to provide additional propulsive thrust. The high 18 and low-pressure turbines 18, 20 drive respectively the compressor 14 and propulsor 12, each by a suitable interconnecting shaft 22, 24.

Other gas turbine engines to which the present disclosure may be applied may have alternative configurations. By way of example such engines may have an alternative number of interconnecting shafts (e.g. three) and/or an alternative number of compressors and/or turbines. Further, the engine may comprise a gearbox provided in the drive train from a turbine to a compressor and/or fan.

The propulsion system 5 further comprises one or more electrical machines driving one or more propulsors. In particular, the system 5 comprises an electric motor 28. The motor 28 is of a conventional type, such as an induction or permanent magnet electric machine, and is configured to drive the propulsor 12. In the present embodiment, the motor 28 is coupled to the propulsor 12 via the low-pressure shaft 24. In this embodiment, the electric motor 28 is of a "core shaft mounted" type, in which a rotor 29 of the motor 28 is mounted directly to a surface of the low-pressure shaft 24, and is surrounded by a stator 31, provided radially outwardly of the rotor 29. The stator comprises electrical windings (not shown), which can be energised to produce a rotating magnetic field. This rotating magnetic field interacts with a magnetic field of the rotor 29, to cause rotation when acting as a motor. Consequently, the propulsor 12 may be powered by either or both of the gas turbine engine 10 via the low-pressure turbine 20, and the motor 28.

Therefore, the propulsion system 5 of Figure 6 represents a parallel hybrid power system, in which an internal combustion engine (the gas turbine 10) is combined with one or more electric motors to drive one or more propulsors. Parallel hybrid systems can be distinguished from serial hybrid systems (described below), in that in a parallel hybrid system, a purely mechanical drive train extends from the gas turbine to the propulsor , with at least one electric motor driving either the same propulsor as that driven by the gas turbine, or a further propulsor.

The electric motor 28 is coupled to an electrical storage device 30 in the form of one or more of a chemical battery, fuel cell, and capacitor, which provides the electric motor 28 with electrical power during operation. In some cases, multiple electrical storages systems, which may be of different types (chemical battery, fuel cell etc) may be provided for each propulsion system 5. In other cases, a common electrical storage device 30 may be provided for multiple propulsion systems.

The motor 28 may act as a generator to provide electrical energy to the electrical storage device 30, the electrical energy being extracted from mechanical torque transmitted by the low-pressure shaft 24.

A controller 34 is provided, which is configured to control at least the motor 28 and electrical storage device 30, to control the torque provided by the motor 28, and the charging / discharging of the electrical storage device 30. The controller 34 is also configured to control operation of the motor 28 acting as a generator, to control electrical power provided to the electrical storage device 30.

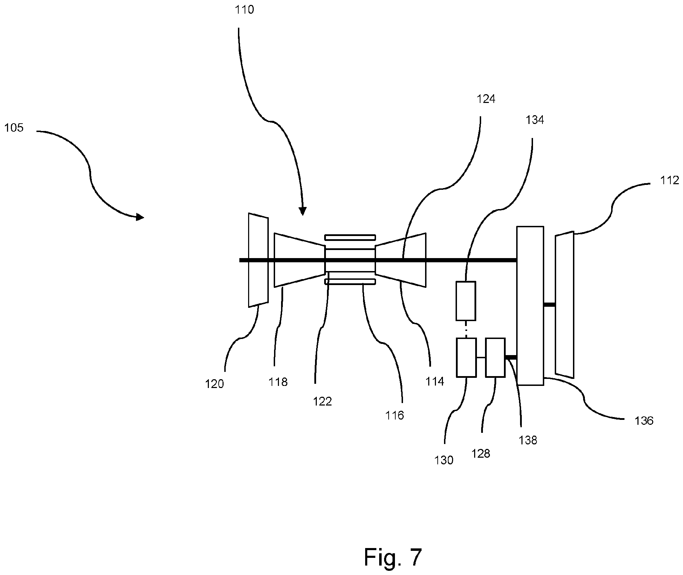

Figure 7 shows a variant propulsion system configuration 105 for use with the aircraft 1. The propulsion system 105 is similar to the system 5, comprising a gas turbine 110 having a fan 112, compressor 114, combustor 116, high and low pressure turbines 118, 120, and high and low pressure shafts 122, 124, configured in a similar manner to the gas turbine engine 10. The propulsion system also comprises an electric motor 128.

However, unlike the propulsion system 5 of Fig. 6, the propulsion system 105 comprises a combining gearbox 136, typically located between the propulsor 112 and compressor 114. The combining gearbox 136 is configured to accept two or more mechanical inputs, and provide a single output. Typically, the gearbox 136 also provides a reduction ratio, such that the output rotates at a slower speed than one or more of the inputs.

The electric motor 128 is coupled to a first input of the combining gearbox 136 via a motor shaft 138. The motor 128 is controlled by a motor controller 130 and is provided with electrical power from an electrical storage device 134. The gas turbine engine low pressure shaft 124 is coupled to a second input of the combining gearbox 124. The output of the combining gearbox 136 is coupled to the fan 112. Consequently, the fan 112 can be driven by either or both of the motor 128 and the gas turbine engine 110. The motor 128 may act as a generator to provide electrical energy to the electrical storage device 130, the electrical energy being extracted from mechanical torque transmitted by the motor shaft 138.

The propulsion systems shown in Figures 6 and 7 contain parallel hybrid power systems in which the gas turbine engines 10 110 provide mechanical power to the propulsors 12 112 via the LP shafts 14, 124, while the electrical storage devices 34, 134 provide electrical power to the motors. Alternative, arrangements for the electric motors 29, 136 and the combining gear box 136 may also be used.

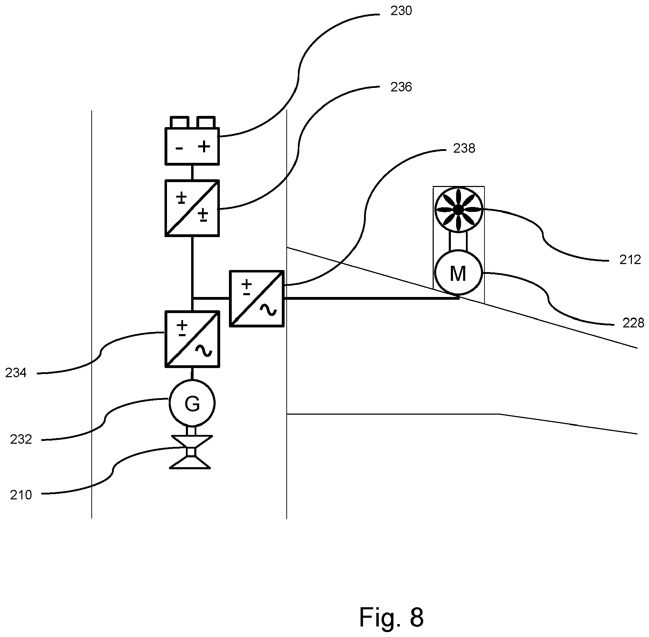

In contrast, Figure 8 shows a schematic of a serial hybrid power system for use with the aircraft 1 of Figure 5. In the serial hybrid power system, a gas turbine 210 drives a generator 232 which produces AC electrical power. This is converted to DC electrical power in a generator converter 234. An electrical storage device 230 is also provided which provides DC electrical power. The DC power from the electrical storage device 230 is converted by a second converter 236 to a DC voltage compatible with the voltage output from the generator converter 234. A motor converter 238 transforms the total DC power to AC power which is used to power an electrical motor 228 which in turn drives the propulsor 212. Thus, in the serial hybrid power system, the gas turbine is not used to drive the propulsion motor by a purely mechanical connection but rather via an electrical intermediary.

A controller (not shown) is provided, and is configured to control the motor 228, the electrical storage device 230, and the operation of the generator 232, to meet a propulsor power demand.

The controller is also configured to operate a transient smoothing strategy to improve the performance of the propulsion system. This strategy takes advantage of the electrical storage device's 230 capability to provide and consume power. By using the electrical storage device, it is possible to operate the propulsor to consume less or more power than is generated by the gas turbine 210. Excess electrical power from the generator 232 can be diverted to the electrical storage device, thereby increasing the state of charge of the electrical storage device. Conversely deficits in electrical power from the generator 232 can be compensated by the electrical storage device, thereby decreasing its state of charge. The controller uses this capability to improve the transient response of the hybrid power system when the propulsor power demand increases and decreases.

This transient smoothing operation is described in relation to the serial hybrid system of Figure 8. However, it may be applied to any hybrid power system which contains an electrical storage device, including parallel hybrid power systems. For instance, in the case of the parallel hybrid power systems of Figures 6 and 7 the gas turbine may provide power via the LP shaft 24 or the combining gear box 136 in excess of that which is required by the propulsor. The excess power can then be converted by the motor 39, 139, acting as a generator, into electrical power which is used to charge the electrical storage device 30, 130.

To implement the transient smoothing strategy the controller is first configured to monitor the propulsor power demand. When there is a change in the propulsor power demand which is greater than that which the gas turbine 210 can respond to immediately, the electrical storage device 230 is used to temporarily provide power and compensate for the power deficit. Thus, the gas turbine response time to an increased propulsor power demand is increased and the gas turbine may accelerate at a rate which will not cause compressor surge or other gas turbine instability.

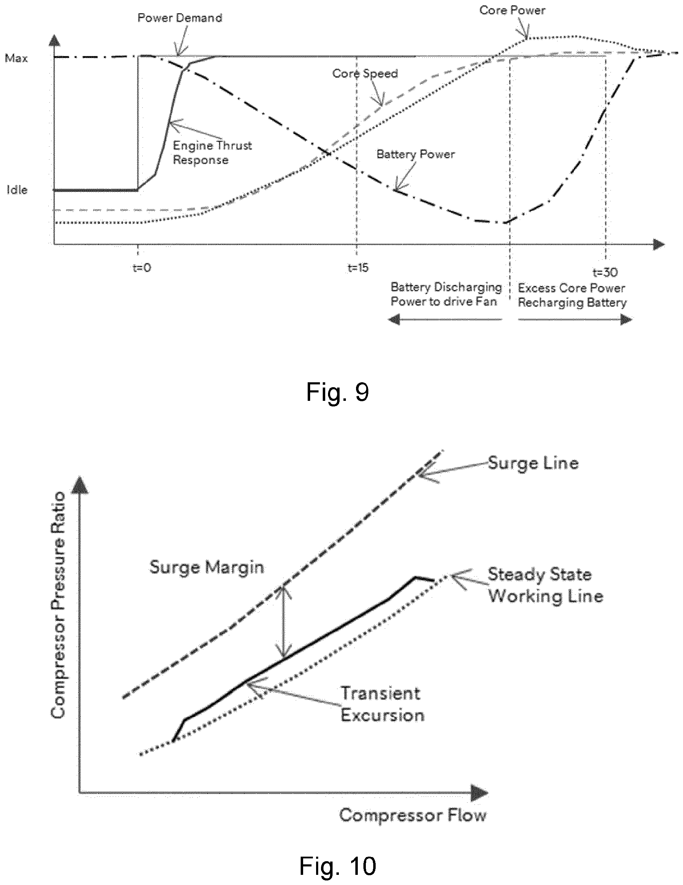

Figure 9 shows a response of a hybrid power system during a slam acceleration when the propulsor power demand is suddenly increased to a maximum. The electrical storage device 230 is used to provide the initial power increase as it is able to deliver the power more quickly than the gas turbine 210. When the thrust demand increases from idle to its maximum value, at t=0, the propulsor power response increases much quicker than the gas turbine power output due to the power being provided by the electrical storage device. At the same time the state of charge of the electrical storage device decreases. As the HP shaft speed increases, more of the propulsor power is delivered by the gas turbine and less by the electrical storage device. Eventually, when the gas turbine is providing all of the propulsor power, any excess power beyond that required to meet the propulsive demand can be supplied to the electrical storage device, via the generator 232 and the converters 234, 236, to raise its state of charge.

Figure 10 shows a compressor map for the HP compressor of the gas turbine 210 during a slam acceleration. In normal, steady state conditions the compressor operates on the steady state working line. During the slam acceleration, the compressor operating point moves off the steady state working line towards the surge line. However, due to the temporary power compensation from the electrical storage device 230, the transient excursion of the compressor is reduced compared to the conventional system shown in Figure 2.

The controller also operates a similar transient smoothing arrangement when the propulsor power demand is decreased. When the gas turbine 210 is providing propulsion power in excess of the propulsor power demand, the excess electrical power produced by the generator 232 is used to charge the electrical storage device 230. More particularly, when the controller detects a sudden decrease in the propulsor power demand, the controller temporarily increases the charge rate of the energy storage device to absorb the excess energy from the gas turbine. This helps the HP shaft of the gas turbine to decelerate to an appropriate speed to meet the decreased propulsor power demand. At this point the charging of the electrical storage device may be ceased. Thus, the aircraft's response to a sudden deceleration request is improved, and the HP shaft may decelerate at a rate which will not cause instability or engine flameout.

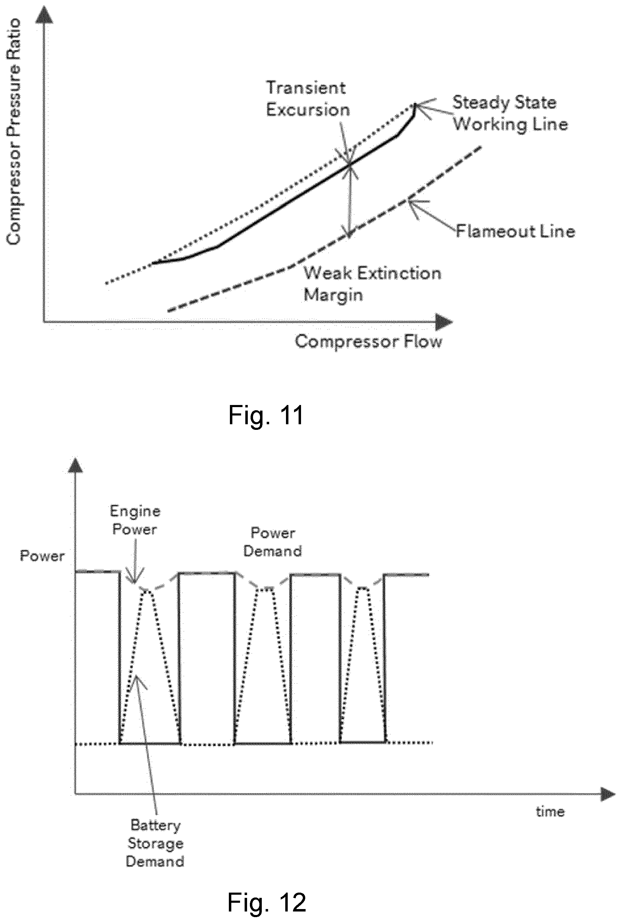

This strategy is illustrated in Figure 11 which shows a compressor map for the HP compressor of the gas turbine 210 during a slam deceleration where the propulsor power demand is at full power and suddenly falls to idle. In normal steady state conditions, the compressor operates on the steady state working line. During a slam deceleration, the compressor operating point moves off the steady state working line towards the flameout line. If the compressor reaches the flameout line, the flame in the gas turbine combustion chamber can extinguish. To ensure the HP compressor does not fall below the flameout line the electrical storage compensates for the sudden loss of load by demanding power and charging. By temporarily diverting excess power from the gas turbine to the electrical storage device, the HP shaft may decelerate more slowly and the transient excursion of the compressor is reduced compared to the conventional system shown in Figure 4.

The capability of the electrical storage device 230 to consume excess power can also be used to operate the gas turbine at a more efficient operating point in steady state conditions, reducing engine cycling. Figure 12 shows the propulsor power demand cycling between full power and low power. At full power the gas turbine 210 is operating optimally and the electrical storage device also provides power. At low power, excess power from the gas turbine is diverted to charge the electrical storage device, keeping the gas turbine at a nominal power output which is still at or close to the gas turbine's efficient operating poi nt.

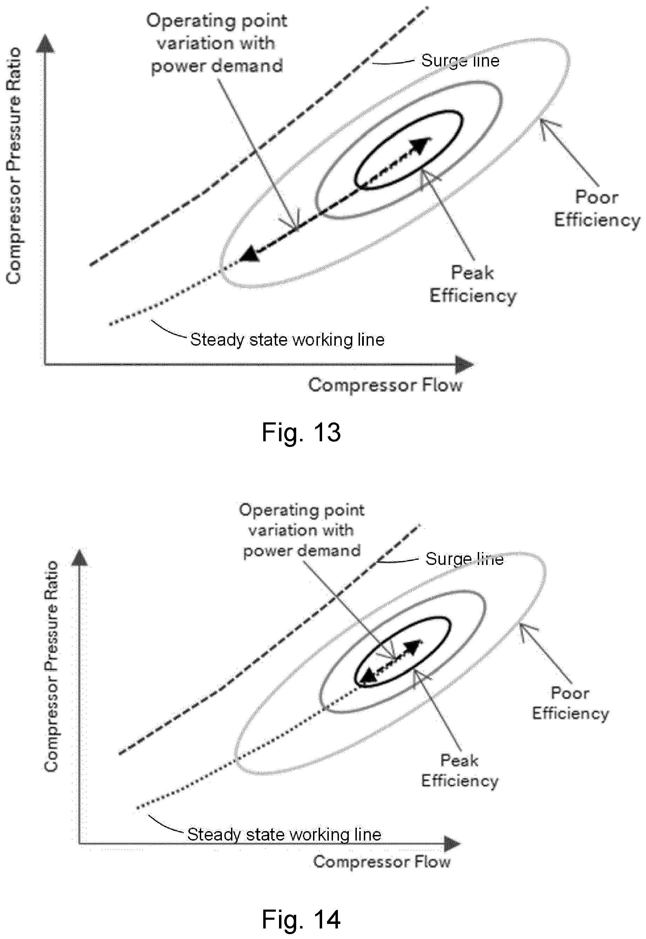

Figure 13 shows a compressor map of the HP compressor for a gas turbine engine which is not part of a hybrid system, with the double headed line representing the range of movement of the operating point of the compressor as the propulsor power demand is varied. Contours indicating regions of peak to poor efficiency are also indicated. The compressor operating point remains on or near to the steady state working line, but experiences excursions into low efficiency regions.

In contrast, Figure 14 shows the corresponding compressor map of the HP compressor of the hybrid system when the electrical storage device is used to compensate for the power demand and reduce engine cycling. The compressor operating point of the gas turbine still remains on or near to the steady state working line, but no longer has excursions into such low efficiency regions.

The controller can also be configured to regulate the state of charge of the electrical storage device 230. During steady state load conditions, when the propulsor power demand is constant, the controller may command the electrical storage device to charge or discharge such that the state of charge is maintained at a target state of charge while simultaneously making compensating changes to the gas turbine power output to maintain a constant total power output. Preferably the target state of charge is from 60% to 80% of the maximum capacity of the electrical storage device. More preferably, the target state of charge is about 70% of the maximum capacity of the electrical storage device. By setting a state of charge which is not the maximum possible state of charge, the electrical storage device is ready to produce or consume power (charge or discharge) as needed for transient smoothing and reducing engine cycling.

On the serial hybrid power system shown in Figure 8, the gas turbine 210 and electrical storage device 230 act as sources on a DC electrical network to supply DC electrical power. The DC power is then converted to AC power for the electric motor 228. In order to implement the transient smoothing and engine cycling compensation strategies described thus far, the power on the electrical network is actively controlled.

The amount of electrical power required in the hybrid system is dictated by the loads. In the example network in Figure 8 the electric motor 228 which drives the propulsor 212 is the only load. Therefore, the power in the system is solely dictated by the propulsor power demand. When there is more than one source, a method is applied to control the share of power between each source. The voltages of the sources must also be regulated to ensure electrical stability.

In a first control strategy, the generator 232, which generates electrical power from the gas turbine 210, is controlled under voltage regulation such that it attempts to produce a constant voltage at a set value. In contrast, the electrical storage device is current controlled by the controller and regulates its current output (and input) to meet demand.

According to this strategy, the controller monitors the power being generated from the gas turbine 210 via the generator 234. This may involve measuring a DC current from the generator converter 234 as the voltage is regulated to be constant. When there is an increase in the propulsor power demand (caused by a request for more thrust) the load (comprised of the propulsor 212 and electric motor 228) will draw more current. This increase in current draw causes the DC voltage of the electrical network to decrease and the generator 232 will increase its current output to regulate the voltage to the set value. The controller is configured to monitor the rate of change of this current increase. As the rate of change of the current increases, the controller commands the electrical storage device 230 to inject additional current to limit the rate of increase of current from the generator. Once the current being produced by the generator reaches a level to provide the increased propulsor power demand, the rate of change in current will decrease to near zero. Thus, the electrical storage device may discontinue injecting current.

When there is a decrease in the propulsor power demand the load will draw less current. This decrease in current will cause the DC voltage of the electrical network to increase and the generator will decrease its current output to regulate the voltage to the set value. The controller monitors the rate of change of this current decrease and commands the electrical storage device to consume current and recharge in order to regulate the rate of decrease of current from the generator to a maximum negative value.

This control strategy enables the rate of change of current to be effectively and efficiently regulated, thus limiting the rate of acceleration and deceleration required of the gas turbine 210. The current regulation and control of the electrical storage device 230 may be performed by subsidiary parts of the controller positioned on or near the electrical storage device which may operate independently to other functions of the controller.

In a second control strategy, the electrical storage device 230 is also used to regulate voltage. Voltage droop control is then used to avoid voltage instability and allow control of the power sharing between the two sources (the generator 232 and the electrical storage device). In droop control the voltage regulated sources are allowed to decrease their voltage output as their power output increases by a ratio known as the droop percentage. This produces a negative feedback loop that stabilises the sharing of power between multiple sources. In the DC system between converters 234, 236, 238, power is directly related to voltage magnitude.

Under this strategy, the droop percentage or droop virtual resistance of each source is chosen such that current/power sharing in steady-state can be split as desired by manipulating the droop setting. Under transient conditions, the effect of droop control may be more limited as the overall transient response is affected by other factors such as how the converters 234, 236, 238 are tuned and the level of filtering and energy storage (from capacitors and inductors). Nonetheless, droop control may have an effect during transients when the timescales of the transients are longer than those of the electrical system responses, whereby the electrical system experiences a transient as an effective steady state. Under these conditions, when a large transient event occurs, such as a slam acceleration, the electrical storage device 230 can respond more quickly provide additional power than the gas turbine generator 232. This effect may be fine-tuned so that the gas turbine generator responds at a specific rate, according to the capabilities of the gas turbine 210, when a large transient occurs. When a large negative transient occurs, such as a slam deceleration, the voltage droop control on the electrical storage device ensures the electrical storage device consumes power by recharging when the voltage increases. Droop control can be provided either by droop virtual resistance, which droops the voltage based on current, or by droop percentage, which droops the voltage based on power.

In a further control strategy, the controller may be configured to monitor the power consumption of the electric motor 228. This may be performed by measuring the DC current at the motor converter 238 since the voltage will be regulated to a fixed setpoint. The generator 232 is controlled under voltage regulation control such that it produces voltage at a set value. The electrical storage device 230 is current controlled to regulate the amount current which it produces or consumes. The controller stores a model of the desired response of the propulsion system (comprising the electric motor 228 and the propulsor 212). The model can be in the form of a transfer function, which receives as input a power demand from the propulsor, and provides as output a corresponding electrical current demand from the electric motor. This can then be compared with the actual current demand of the propulsor and the difference used as a current setpoint for the electrical storage device 230. Thus when the propulsor power demand is increased or decreased, the same demand is input to the model stored in the controller. The controller then determines the difference between the model response and the actual motor response and controls the electrical storage device to inject or demand that difference in current. An advantage of this strategy is that the propulsor response appears as a specific desired response for the gas turbine and the model provides flexibility as to what that response should look like.

In general, the controller of any of the hybrid control systems described above, may comprise a main controller which controls each component of the hybrid power system. However, the controller may also comprise subsidiary controllers and hardware components associated with the electrical network, the electrical storage device or the generators. These subsidiary controllers may operate together or independently of each other to monitor and control the voltage and current on the electrical network to implement the above described strategies.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as defined in the appended claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A hybrid power system (5) for an aircraft (1) comprising:
a gas turbine (210) connected to a generator (232) for generating electrical power;
an electrical storage device (230) configured to output electrical power;
a propulsor (212);
a motor (228) operable to drive the propulsor using electrical power from either or both of the generator and the electrical storage device; and
a controller which, to meet a propulsor power demand, is configured to control (i) an amount of electrical power generated by the generator, and (ii) an amount of electrical power outputted by the electrical storage device;
wherein, in a first control mode coinciding with an increase in the propulsor power demand sufficient to cause a transient excursion of the operating point of a compressor of the gas turbine from a steady state working line, the controller is further configured to temporarily increase the amount of electrical power outputted by the electrical storage device such that the transient excursion is reduced; **characterised in that**:
the generator is configured to provide electrical power to the motor at a first DC voltage and first DC current,
the electrical storage device is configured to provide electrical power to the motor at a second DC voltage and a second DC current, and
the controller is configured to control the first and second DC voltages using DC voltage droop control by setting a droop percentage or droop virtual resistance and setting a transient response of the controller such that the second DC current increases at a rate faster than the first DC current.

2. A hybrid power system for an aircraft according to claim 1, wherein:
the electrical storage device is further configured to receive electrical power from the generator (232); and
the controller, to meet a propulsor power demand, is further configured to control (i) the amount of electrical power generated by the generator, and (ii) an amount of electrical power received by the electrical storage device from the generator;
wherein in a second control mode coinciding with a decrease in the propulsor power demand sufficient to cause a transient excursion of the operating point of the compressor of the gas turbine from a steady state working line, the controller is further configured to temporarily increase the amount of electrical power received by the electrical storage device such that the transient excursion is reduced.

3. The hybrid power system of any one of claims 1 or 2, wherein the controller is configured to:
monitor a state of charge of the electrical storage system; and
when the state of charge is lower than a target state of charge, increase the state of charge by increasing the power output of the gas turbine in excess of that required by the propulsor power demand such that the electrical storage system receives electrical power from the generator, and
when the state of charge is higher than the target state of charge, decrease the state of charge by decreasing the power output of the generator to be less than that required by the propulsor power demand such that the electrical storage system outputs electrical power to the motor.

4. The hybrid power system of any one of the previous claims, wherein:
the generator is configured to generate power at a constant DC voltage such that the current generated by the generator varies when the propulsor power demand varies; and
the controller is configured in the first control mode to detect an increase in the rate of increase of the current generated by the generator caused by an increase in the propulsor power demand, and in response increase the amount of current output by the electrical storage device to constrain the rate of increase in the current generated by the generator to within a predetermined limit.

5. The hybrid power system of claim 4, as dependent on claim 2, wherein:
the controller is configured in the second control mode to detect an increase in the rate of decrease of the current generated by the generator caused by a decrease in the propulsor power demand and, in response increase the amount of electrical power received by the electrical storage device to constrain the rate of decrease in the current generated by the generator to within a predetermined limit.

6. The hybrid power system of any one of claims 1 to 3, wherein:
the generator and the electrical storage device are configured to generate electrical power at a constant DC voltage, and
the controller includes a model of desired propulsor responses, and is configured to monitor the power consumption of the motor, and in the first control mode to use the model to calculate a target current to be output by the electrical storage device in response to an increase in the power consumption of the motor.

7. The hybrid power system of claim 6, as dependent on claim 2, wherein:
the controller is configured in the second control mode to use the model to calculate a target current to be received by the electrical storage device in response to a decrease in the power consumption of the motor.

8. An aircraft fitted with one or more of the hybrid power systems of any one of the previous claims.

## Patentansprüche

1. Hybrides Leistungssystem (5) für ein Luftfahrzeug (1), umfassend:
eine Gasturbine (210), die mit einem Generator (232) zur Erzeugung elektrischer Leistung verbunden ist;
eine elektrische Speichervorrichtung (230), die zum Abgeben elektrischer Leistung konfiguriert ist;
eine Vortriebseinrichtung (212);
einen Motor (228), der betreibbar ist, um die Vortriebseinrichtung unter Verwendung von elektrischer Leistung von einem oder beiden von dem Generator und der elektrischen Speichervorrichtung anzutreiben; und
eine Steuerung, die, um einen Leistungsbedarf der Vortriebseinrichtung zu erfüllen, dazu konfiguriert ist, (i) eine Menge an elektrischer Leistung, die durch den Generator erzeugt wird, und (ii) eine Menge an elektrischer Leistung, die durch die elektrische Speichervorrichtung abgegeben wird, zu steuern;
wobei in einem ersten Steuermodus, der mit einem Anstieg des Leistungsbedarfs der Vortriebseinrichtung zusammenfällt, der ausreicht, um einen vorübergehenden Ausschlag des Betriebspunkts eines Verdichters der Gasturbine von einer stationären Arbeitslinie zu verursachen, die Steuerung ferner dazu konfiguriert ist, die Menge an elektrischer Leistung, die durch die elektrische Speichervorrichtung abgegeben wird, zeitweilig zu erhöhen, sodass der vorübergehende Ausschlag verringert wird;
**dadurch gekennzeichnet, dass**:
der Generator dazu konfiguriert ist, dem Motor elektrische Leistung bei einer ersten DC-Spannung und einer ersten DC-Stromstärke bereitzustellen,
die elektrische Speichervorrichtung dazu konfiguriert ist, dem Motor elektrische Leistung mit einer zweiten DC-Spannung und einer zweiten DC-Stromstärke bereitzustellen, und
die Steuerung dazu konfiguriert ist, die erste und die zweite DC-Spannung unter Verwendung einer DC-Spannungsstatiksteuerung zu steuern, indem sie einen Statikprozentsatz oder einen virtuellen Statikwiderstand festlegt und eine vorübergehende Reaktion der Steuerung so festlegt, dass die zweite DC-Stromstärke schneller als die erste DC-Stromstärke ansteigt.

2. Hybrides Leistungssystem für ein Luftfahrzeug nach Anspruch 1, wobei:
die elektrische Speichervorrichtung ferner dazu konfiguriert ist, elektrische Leistung von dem Generator (232) aufzunehmen; und
die Steuerung, um einen Leistungsbedarf der Vortriebseinrichtung zu erfüllen, ferner dazu konfiguriert ist, (i) die Menge an elektrischer Leistung, die durch den Generator erzeugt wird, und (ii) eine Menge an elektrischer Leistung, die durch die elektrische Speichervorrichtung von dem Generator aufgenommen wird, zu steuern;
wobei in einem zweiten Steuermodus, der mit einer Abnahme des Leistungsbedarfs der Vortriebseinrichtung zusammenfällt, die ausreicht, um einen vorübergehenden Ausschlag des Betriebspunkts des Verdichters der Gasturbine von einer stationären Arbeitslinie zu verursachen, die Steuerung ferner dazu konfiguriert ist, die Menge an elektrischer Leistung, die durch die elektrische Speichervorrichtung aufgenommen wird, zeitweilig zu erhöhen, sodass der vorübergehende Ausschlag verringert wird.

3. Hybrides Leistungssystem nach einem der Ansprüche 1 oder 2, wobei die Steuerung zu Folgendem konfiguriert ist:
Überwachen eines Ladezustands des elektrischen Speichersystems; und
wenn der Ladezustand niedriger ist als ein Zielladezustand, Erhöhen des Ladezustands durch Erhöhen der Leistungsabgabe der Gasturbine über das durch den Leistungsbedarf der Vortriebseinrichtung geforderte Maß hinaus, sodass das elektrische Speichersystem elektrische Leistung von dem Generator aufnimmt, und
wenn der Ladezustand höher ist als ein Zielladezustand, Verringern des Ladezustands durch Verringern der Leistungsabgabe des Generators, sodass sie niedriger ist als diejenige, die durch den Leistungsbedarf der Vortriebseinrichtung gefordert wird, sodass das elektrische Speichersystem elektrische Leistung an den Motor abgibt.

4. Hybrides Leistungssystem nach einem der vorhergehenden Ansprüche, wobei:
der Generator dazu konfiguriert ist, Leistung bei einer konstanten DC-Spannung zu erzeugen, sodass die durch den Generator erzeugte Stromstärke variiert, wenn der Leistungsbedarf der Vortriebseinrichtung variiert; und
die Steuerung in dem ersten Steuermodus dazu konfiguriert ist, einen Anstieg der Anstiegsrate der durch den Generator erzeugten Stromstärke, der durch einen Anstieg des Leistungsbedarfs der Vortriebseinrichtung verursacht wird, zu erkennen und als Reaktion darauf die Menge an durch die elektrische Speichervorrichtung abgegebener Stromstärke zu erhöhen, um die Anstiegsrate der durch den Generator erzeugten Stromstärke auf innerhalb einer vorbestimmten Grenze zu beschränken.

5. Hybrides Leistungssystem nach Anspruch 4, in Abhängigkeit von Anspruch 2, wobei:
die Steuerung in dem zweiten Steuermodus dazu konfiguriert ist, einen Anstieg der Abnahmerate der durch den Generator erzeugten Stromstärke, der durch eine Abnahme des Leistungsbedarfs der Vortriebseinrichtung verursacht wird, zu erkennen und als Reaktion darauf die Menge an durch die elektrische Speichervorrichtung aufgenommener elektrischer Leistung zu erhöhen, um die Abnahmerate der durch den Generator erzeugten Stromstärke auf innerhalb einer vorbestimmten Grenze zu beschränken.

6. Hybrides Leistungssystem nach einem der Ansprüche 1 bis 3, wobei:
der Generator und die elektrische Speichervorrichtung dazu konfiguriert sind, elektrische Leistung bei einer konstanten DC-Spannung zu erzeugen, und
die Steuerung ein Modell gewünschter Reaktionen der Vortriebseinrichtung enthält und dazu konfiguriert ist, den Leistungsverbrauch des Motors zu überwachen und in dem ersten Steuermodus das Modell zum Berechnen einer Zielstromstärke zu verwenden, die durch die elektrische Speichervorrichtung als Reaktion auf einen Anstieg des Leistungsverbrauchs des Motors abzugeben ist.

7. Hybrides Leistungssystem nach Anspruch 6, in Abhängigkeit von Anspruch 2, wobei:
die Steuerung in dem zweiten Steuermodus dazu konfiguriert ist, das Modell zum Berechnen einer Zielstromstärke zu verwenden, die durch die elektrische Speichervorrichtung als Reaktion auf eine Abnahme des Leistungsverbrauchs des Motors aufzunehmen ist.

8. Luftfahrzeug, das mit einem oder mehreren der hybriden Leistungssysteme nach einem der vorhergehenden Ansprüche ausgestattet ist.

## Revendications

1. Système d'alimentation hybride (5) pour un aéronef (1) comprenant :
une turbine à gaz (210) reliée à un générateur (232) pour générer de l'énergie électrique ;
un dispositif de stockage électrique (230) configuré pour délivrer de l'énergie électrique ;
un propulseur (212) ;
un moteur (228) servant à entraîner le propulseur en utilisant l'énergie électrique provenant du générateur et/ou du dispositif de stockage électrique ; et
un dispositif de commande qui, pour répondre à une demande de puissance du propulseur, est configuré pour contrôler (i) une quantité d'énergie électrique générée par le générateur, et (ii) la quantité d'énergie électrique délivrée par le dispositif de stockage électrique ;
dans un premier mode de commande coïncidant avec une augmentation de la demande de puissance du propulseur suffisante pour provoquer une excursion transitoire du point de fonctionnement d'un compresseur de la turbine à gaz à partir d'une ligne de fonctionnement en régime permanent, ledit dispositif de commande étant en outre configuré pour augmenter temporairement la quantité d'énergie électrique délivrée par le dispositif de stockage électrique de sorte que l'excursion transitoire soit réduite ;
**caractérisé en ce que** :
le générateur est configuré pour fournir de l'énergie électrique au moteur à une première tension CC et un premier courant CC,
le dispositif de stockage électrique est configuré pour fournir de l'énergie électrique au moteur à une seconde tension CC et un second courant CC, et
le dispositif de commande est configuré pour contrôler les première et seconde tensions CC à l'aide d'une commande de baisse de tension CC en définissant un pourcentage de baisse ou une résistance virtuelle de baisse et en définissant une réponse transitoire du dispositif de commande de sorte que le second courant CC augmente à un rythme plus rapide que le premier courant CC.

2. Système d'alimentation hybride pour un aéronef selon la revendication 1 :
ledit dispositif de stockage électrique étant en outre configuré pour recevoir de l'énergie électrique provenant du générateur (232) ; et
ledit dispositif de commande, pour répondre à une demande de puissance du propulseur, est en outre configuré pour contrôler (i) la quantité d'énergie électrique générée par le générateur, et (ii) la quantité d'énergie électrique reçue par le dispositif de stockage électrique en provenance du générateur ;
dans un second mode de commande coïncidant avec une diminution de la demande de puissance du propulseur suffisante pour provoquer une excursion transitoire du point de fonctionnement du compresseur de la turbine à gaz à partir d'une ligne de fonctionnement en régime permanent, ledit dispositif de commande étant en outre configuré pour augmenter temporairement la quantité d'énergie électrique reçue par le dispositif de stockage électrique de sorte que l'excursion transitoire soit réduite.

3. Système d'alimentation hybride selon l'une quelconque des revendications 1 ou 2, ledit dispositif de commande étant configuré pour :
surveiller l'état de charge du système de stockage électrique ; et
lorsque l'état de charge est inférieur à un état de charge cible, augmenter l'état de charge en augmentant la puissance de sortie de la turbine à gaz au-delà de celle requise par la demande de puissance du propulseur de sorte que le système de stockage électrique reçoive de l'énergie électrique du générateur , et
lorsque l'état de charge est supérieur à l'état de charge cible, diminuer l'état de charge en diminuant la puissance de sortie du générateur pour qu'elle soit inférieure à celle requise par la demande de puissance du propulseur de sorte que le système de stockage électrique délivre de l'énergie électrique au moteur.

4. Système d'alimentation hybride selon l'une quelconque des revendications précédentes :
ledit générateur étant configuré pour générer de l'énergie à une tension CC constante de sorte que le courant généré par le générateur varie lorsque la demande de puissance du propulseur varie ; et
ledit dispositif de commande est configuré dans le premier mode de commande pour détecter une augmentation du taux d'augmentation du courant généré par le générateur provoquée par une augmentation de la demande de puissance du propulseur, et en réponse augmenter la quantité de courant délivrée par le dispositif de stockage électrique pour limiter le taux d'augmentation du courant généré par le générateur à l'intérieur d'une limite prédéfinie.

5. Système d'alimentation hybride selon la revendication 4, alors qu'elle dépend de la revendication 2 :
ledit dispositif de commande étant configuré dans le second mode de commande pour détecter une augmentation du taux de diminution du courant généré par le générateur provoquée par une diminution de la demande de puissance du propulseur et, en réponse, augmenter la quantité d'énergie électrique reçue par le dispositif de stockage électrique pour limiter le taux de diminution du courant généré par le générateur à l'intérieur d'une limite prédéfinie.

6. Système d'alimentation hybride selon l'une quelconque des revendications 1 à 3 :
ledit générateur et ledit dispositif de stockage électrique étant configurés pour générer de l'énergie électrique à une tension CC constante, et
ledit dispositif de commande comprenant un modèle de réponses de propulseur souhaitées et étant configuré pour surveiller la consommation d'énergie du moteur et, dans le premier mode de commande, pour utiliser le modèle pour calculer un courant cible devant être émis par le dispositif de stockage électrique en réponse à une augmentation de la consommation électrique du moteur.

7. Système d'alimentation hybride selon la revendication 6, alors qu'elle dépend de la revendication 2 :
ledit dispositif de commande étant configuré dans le second mode de commande pour utiliser le modèle pour calculer un courant cible devant être reçu par le dispositif de stockage électrique en réponse à une diminution de la consommation électrique du moteur.

8. Aéronef équipé d'un ou plusieurs des systèmes d'alimentation hybrides selon l'une quelconque des revendications précédentes.
